# EUROPÄISCHE PATENTSCHRIFT

(11) **EP 1 456 270 B1**
(45) Veröffentlichungstag und Bekanntmachung des Hinweises auf die Patenterteilung: **06.02.2008**
(21) Anmeldenummer: 02792818.3
(22) Anmeldetag: 27.11.2002
(51) Int. Cl.: C08G 18/48, C08G 18/10, B27D 1/00

(54) **HERSTELLVERFAHREN FÜR SCHICHTSTOFFE AUF HOLZFURNIERBASIS**
METHOD FOR PRODUCING LAMINATED MATERIALS BASED ON WOOD VENEER
PROCEDE DE FABRICATION DE MATERIAUX LAMINES A BASE DE BOIS CONTREPLAQUES

(30) Priorität: 10.12.2001 DE 10160572
(43) Veröffentlichungstag der Anmeldung: 15.09.2004
(73) Patentinhaber: Bayer MaterialScience AG, 51368 Leverkusen (DE)
(72) Erfinder: HAAS, Peter, 42781 Haan (DE); HOPPE, Ernst-Martin, 51427 Bergisch Gladbach (DE); LARIMER, Donald-Richard, 51469 Bergisch Gladbach (DE); PIELASCH, Andreas, 51069 Köln (DE)
(86) Internationale Anmeldenummer: PCT/EP2002/013402
(87) Internationale Veröffentlichungsnummer: WO 2003/054046

(56) Entgegenhaltungen:
- WO-A-95/10555
- WO-A-97/02134
- WO-A-99/19141
- GB-A- 2 199 333
- DATABASE WPI Week 8827 Derwent Publications Ltd., London, GB; AN 1988-187405 XP002237554 & JP 63 125588 A (SUNSTAR GIKEN), 28. Mai 1988 (1988-05-28)
- DATABASE WPI Week 7738 Derwent Publications Ltd., London, GB; AN 1977-67946y XP002237555 & JP 52 096640 A (DAI-ICHI), 22. August 1978 (1978-08-22)

## Beschreibung

Die Erfindung betrifft ein Verfahren zur Herstellung von mehrlagigen Schichtstoffen auf Holzfurnierbasis durch Verpressen von mit Bindemittel beleimten Furnierholzen, bei dem durch spezielle Bindemittel die Kaltklebefestigkeit der Laminate erhöht wird.

Presswerkstoffe als Veredlungsprodukte von Furnieren aus Holzsorten aller Wachstumsregionen (z.B. Kiefer, Okumee, Pappel) und Bindemitteln werden durch Verpressung bei unterschiedlichen Temperaturen zu Holzlaminaten wie ,Laminated Veneer Lumber' (LVL), Schichtholz-, Sperrholz-, Sternholz- oder Tischlerplatten verarbeitet. Sie spielen als hochwertige Materialien für den Möbel-, Bau- und Verpackungssektor eine bedeutende Rolle.

Wichtige Bindemittel bei der Herstellung dieser Laminate sind Aminoplastharze (Harnstoff-Formaldehyd-Harz (UF), Melamin-Hamstoff-Formaldehyd-Harz (MUF)) oder Phenoplastharze (PF). Nachteil dieser Kondensationsharze sind die zum Teil langen Presszeiten (MUF, PF), dunklen Klebefugen (PF), hohen Presstemperaturen (MUF, PF) sowie eine unzureichende Wasserbeständigkeit (UF).

Mit PUR-Sperrholz-Bindemitteln hingegen können die oben genannten Nachteile vermieden werden. Nachteile dieser PUR-Bindemittel sind jedoch wiederum eine sehr schlechte Kaltklebefestigkeit der beleimten Schichtstoffe sowie die Penetration des Bindemittels an die Oberfläche der Deckschicht des Sperrholzes ("Durchschlagen des Bindemittels"). So zieht pMDI völlig in die Holzfurniere ein, ohne eine ausreichende Klebefuge an der Furnieroberfläche zu bilden.

Zur Lösung dieses Problems sind verschiedene Vorschläge gemacht worden. Laut EP-A 352 558 wird die Kaltklebefestigkeit durch Verwendung von Polyisocyanaten, Verbindungen mit mindestens zwei gegenüber Isocyanaten reaktionsfähigen Wasserstoffatomen und Alkylencarbonaten verbessert. In EP-A 93 357 werden Prepolymere auf der Basis von urethanmodifizierten Diphenylmethandiisocyanaten als Bindemittel beschrieben. Aus WO 99/19141 gehen Bindemittel aus Diphenylmethandiisocyanaten und isocyanatreaktiven Polymeren für die Sperrholzherstellung durch Furnierverpressung hervor. Besonders die Anfangsfestigkeit in kaltem Zustand lässt jedoch noch zu wünschen übrig.

Es wurde nun gefunden, dass die Kaltklebefestigkeit bei der Verarbeitung der beleimten Furniere erheblich verbessert werden kann, wenn pMDI-Prepolymere als Bindemittel verwendet werden, die durch Umsetzung mit EO-reichen hydroxyfunktionellen Polyethern urethanmodifiziert sind.

Gegenstand der vorliegenden Erfindung ist ein Verfahren zur Herstellung von Presswerkstoffen auf der Basis von mehrlagigen Holzfurnieren und Prepolymeren als Bindemittel, bei dem als Bindemittel Urethangruppen enthaltende Prepolymere mit einem NCO-Gehalt von 20 bis 31 Gew.-% verwendet werden, die durch Umsetzung von Polyisocyanaten der Diphenylmethandiisocyanat-Reihe mit hydrooyfunktionellen Polyethern mit einen EO-Gehalt von mehr als 60 Gew-%, bezogen auf die Gesamtmenge an zur Herstellung der Polyether eingesetzten Alkylenoxiden, und wobei die hydroxyfunktionellen Polyether mit Verbindungen ausgewählt aus der Gruppe von Ethylenglykol, Diethylenglykol, Triethylenglykol, 1,2-Propylenglykol, 1,4-Butandiol, Hexamethylenglykol, Bisphenol A, Trimethylolpropan Glycerin, Pentaerythrit, Sorbit, Rohrzucker, abgebaute Stärter oder Wasser gestartet werden, erhältlich sind.

Zur Herstellung der Prepolymere werden Polyisocyanate der Diphenylmethandiisocyanat-Reihe eingesetzt, z.B. Polyphenyl-polymethylen-polyisocyanate, wie sie durch Anilin-Formaldehyd-Kondensation und anschließende Phosgenierung hergestellt werden ("rohes MDI"). Bevorzugt setzt man als Polyisocyanatkomponente höherkernige Isocyanate der Diphenylmethandiisocyanat-Reihe (pMDI-Typen) ein. Besonders bevorzugt weisen diese einen Gehalt an monomerem Diphenylmethandiisocyanat von weniger als 55 Gew.-% auf.

Die Prepolymere werden durch Umsetzung der Polyisocyanate mit hydroxyfunktionellen Polyethern mit einen EO-Gehalt von mehr als 60 Gew.-%, bevorzugt mehr als 70 Gew.-%, bezogen auf die Gesamtmenge an zur Herstellung der Polyether eingesetzten Alkylenoxiden, erhalten. Die hydroxyfunktionellen Polyether weisen in der Regel 1 bis 8, bevorzugt 2 bis 6 OH-Gruppen auf. Sie besitzen bevorzugt zahlenmittlere Molekulargewichte von 400 bis 10.000 g/mol, besonders bevorzugt 1.000 bis 8.000 g/mol. Es werden vorzugsweise Poly(oxypropylen-polyoxyethylen)polyole eingesetzt.

Die hydroxyfunktionellen Polyether können nach bekannten Verfahren, hergestellt werden, beispielsweise durch anionische Polymerisation von Alkylenoxiden in Gegenwart von aktive Wasserstoffatome enthaltenden Starterverbindungen. Geeignete Alkylenoxide enthalten 2 bis 4 Kohlenstoffatome im Alkylenrest. Beispiele sind neben Ethylenoxid Tetrahydrofuran, 1,2-Propylenoxid, 1,2- bzw. 2,3-Butylenoxid, vorzugsweise werden Ethylenoxid (EO) und 1,2-Propylenoxid (PO) eingesetzt. Die Alkylenoxide können alternierend nacheinander oder als Mischungen verwendet werden.

Als aktive Wasserstoffatome aufweisende Starterverbindungen werden Verbindungen mit (zahlenmittleren) Molekulargewichten von 18 bis 2.000 g/mol und 1 bis 8 Hydroxylgruppen eingesetzt, ausgewählt aus der Gruppe von Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke oder. Wasser. Es können auch oligomere Alkoxylierungsprodukte der zuvor genannten niedermolekularen Starter mit .(zahlenmittleren) Molekulargewichten von 200 bis 2.000 g/mol als Starterverbindungen eingesetzt werden.

Die Umsetzung von Polyisocyanaten und hydroxyfunktionellen Polyethern erfolgt in der Regel bei Temperaturen von 20 bis 120°C. Polyisocyanate und hydroxyfunktionelle Polyether werden in solchen Mengenverhältnissen eingesetzt, dass das gebildete Prepolymer einen NCO-Gehalt von 20 bis 31 Gew.-%, bevorzugt 22 bis 28 Gew.-% aufweist. Bevorzugt haben die Prepolymere ein Äquivalenzgewicht von 250 bis 5.000 g/mol.

Geeignete Rohstoffe, die mit dem erfindungs gemäßen Bindemittel gebunden werden können, sind Holzfurniere, beispielsweise aus Hölzern der borealen, subtropischen oder tropischen Regionen. Zusätzlich können auch Kunststoffe mitverwendet werden. Diese Kunststoffe können in Form von dünnen Laminaten, Platten oder Folien vorliegen. Zum Aufbau der Laminate können auch Papiere, Zellstoff, Gewebebahnen, Vliese sowie Absperr- oder Deckfurniere mitverwendet werden.

Der Rohstoff wird mit dem Bindemittel in einer Menge von 40 bis 250 g/m², vorzugsweise 60 bis 180 g/m² Holzfläche beaufschlagt und - im allgemeinen unter Einwirkung von Druck und Wärme (z.B. Temperatur 70 bis 250°C und spezifischer Druck 1 bis 50 bar) - zu Platten oder Formkörpern verpresst. Dabei wird oft so verfahren, dass eine ungerade Anzahl an Furnieren zur Herstellung des Sperrholzes verwendet werden. Häufig werden dabei für die Außenlagen dünnere Furniere verwendet als für den Innenbereich des Sperrholzes. Nur die geradzahligen Lagen werden doppelseitig mit dem Bindemittel beaufschlagt. Durch zueinander gesperrtes Zusammenlegen der abwechselnd beleimten und unbeleimten Schichten und anschließendes heißes Verpressen werden die Furnierlagen miteinander zu einem Sperrholz verbunden. Bei LVL hingegen werden alle Furniere parallel in Produktionsrichtung gelegt und nach der kontinuierlichen Vorbehandlung heiß verpresst.

Die Beleimung wird üblicherweise mit einer 4 Walzen-Beleimungsmaschine durchgeführt. Ebenso wie Kondensationsharze können somit auch erfindungsgemäße PUR-Bindemittel mit dieser Auftragstechnik sowie anderen Techniken wie Coating, versprühen (Airless, Zweistoff) oder Rakeln aufgetragen werden.

In einer Ausfiihrungsform der Erfindung werden die Furniere nach der Beleimung mit Wasser - in Form eines Sprühnebels beaufschlagt. Die Wassermenge kann bis zu 150 g pro m² Laminatoberfläche betragen, vorzugsweise beträgt sie 10 g/m²bis 80g/m². Zur Vermeidung einer vorzeitigen Aushärtung der Bindemittel (Verlängerung des 'pot life') sowie zur exakten individuellen Viskositäts-Einstellung des PUR-Bindemittels können dem Bindemittel Zeolithe zugegeben werden. Die Zugabemenge kann 0,3 bis 25 Gew.-%, bezogen auf die Gesamtmenge des Bindemittels, betragen, vorzugsweise beträgt sie jedoch 1 bis 5 Gew:-%.

Durch anschließende Vorpressung werden die beleimten und unbeleimten Furnierlagen zu einem Verbund zusammenfügt, um einen problemlosen Transport des noch heiß zu verpressenden Sperrholzes in die Heißpresse zu ermöglichen. Die distanzgesteuerte kalte Vorpresse wird auf ca. 0,1 bis 0,4 mm über der kalkulierten Summe aller Fumierlagen geschlossen und führt somit nicht zu einer Verdichtung, sondern lediglich einem Verbund des Furniersystems. Der Verbund muss eine für den Transport in die Heißpresse ausreichende Kaltklebefestigkeit aufweisen.

Beim anschließenden Heißpressen bei 70°C - 200°C werden die Fumierlagen mit dem bei erhöhter Temperatur aushärtenden Bindemittel miteinander verbunden. Da die verwendeten PUR-Bindemittel kein Wasser enthalten, kann der Wasserhaushalt der Furnierlagen entsprechend den individuellen Bedürfnissen durch den Trocknungsvorgang oder durch Sprühwasserzugabe exakt eingestellt werden. Somit können Produktivitätssteigerungen durch die Verkürzung des Pressvorgangs dank eines optimalen Wasserhaushalts erreicht werden.

### Beispiele

### A. Prepolymere

Zur Herstellung der Prepolymere wurden die jeweiligen Komponenten vermischt und anschließend zwei Stunden lang unter ständigem Rühren bei 95°C getempert.

### Prepolymere 1

Prepolymere aus 840 g eines polymeren MDI (,pMDI`) mit einem NCO-Gehalt von ca. 31,5 Gew.-% (Desmodur® 1520 A20, Bayer AG) und 210 g eines mit Glycerin gestarteten Polyetherpolyols der OH-Zahl 36 mit 85% primären OH-Gruppen, PO/EO-Verhältnis 28 Gew.-% / 72 Gew.-%. Das Prepolymer hat einen NCO-Gehalt von 24,5 Gew.-% und eine Viskosität von 1400 mPa·s (25°C).

### Prepolymer 1 A

In 950 g Prepolymer 1 wurden 50 g Zeolith L (UOP-L Pulver, UOP GmbH, D-51368 Leverkusen) dispergiert.

### Prepolymer 1 B

In 900 g Prepolymer 1 wurden 100 g Zeolith L (UOP-L Pulver, UOP GmbH, D-51368 Leverkusen) dispergiert.

### Prepolymer 1 C

In 850 g Prepolymer 1 wurden 150 g Zeolith L (UOP-L Pulver, UOP GmbH, D-51368 Leverkusen) dipergiert.

### Prepolymere 2

Prepolymer aus 840 g Desmodur® 1520 A20 und 160 g eines mit Sorbit gestarteten Polyetherpolyols der OH-Zahl 100 mit 90% primären OH-Gruppen, PO/EO-Verhältnis 18 Gew.-% / 82 Gew.-%. Das Prepolymer hat einen NCO-Gehalt von 25,5 Gew.-% und eine Viskosität von 2500 mPa·s (25°C).

### Prepolymer 3 (Vergleich)

Prepolymer aus 775 g Desmodur® 1520 A20 und 225 g eines mit Butyldiethylenglykol gestarteten Polyetherpolyols der OH-Zahl 25 mit 90% primären OH-Gruppen, PO/EO-Verhältnis 15 Gew.-% / 85 Gew.-%. Das Prepolymer hat einen NCO-Gehalt von 23,4 Gew.-% und eine Viskosität von 620 mPa·s (25°C).

### Prepolymer 4

Prepolymer aus 266 g Desmodur® 1520 A20 und 60 g eines mit Ethylenglykol gestarteten Polyethylenoxids der OH-Zahl 73. Das Prepolymer hat einen NCO-Gehalt von 24,3 Gew.-% und eine Viskosität von 1300 mPa·s (25°C).

### Prepolymer 5

Prepolymer aus 840 g Desmodur® 1520 A20 und 160 g eines mit Propylenglykol gestarteten Polyetherpolyols der OH-Zahl 185 mit mehr als 90% primären OH-Gruppe, PO/EO-Verhältnis 3 Gew.-% 97 Gew.-%. Das Prepolymer hat einen NCO-Gehalt von 24,1 Gew.-% und eine Viskosität von 3100 mPa·s (25°C).

### Prepolymer 6 (Vergleich)

Prepolymer aus 1200 g Desmodur® 1520 A20 und 300 g eines mit Trimethylolpropan gestarteten Polyetherpolyols der OH-Zahl 28 mit 85% primären OH-Gruppen, PO/EO-Verhältnis 85 Gew.-% 15 Gew.-%. Das Prepolymer hat einen NCO-Gehalt von 24,4 Gew.-% und eine Viskosität von 1240 mPa·s (25°C).

### Prepolymer 7 (Vergleich)

Prepolymer aus 1200 g Desmodur® 1520 A20 und 300 g eines mit Propylenglykol gestarteten Polyetherpolyols der OH-Zahl 28 mit 85% primären OH-Gruppen, PO/EO-Verhältnis 50 Gew.-% / 50 Gew.-%. Das Prepolymer hat einen NCO-Gehalt von 23,8 Gew.-% und eine Viskosität von 1200 mPa·s (25°C).

### B. Beleimung und Kaltverpressung von Furnieren

Es wurden Furniere aus Okumee-Holz mit einer Dichte von 0,4-0,5 g/m³ und einem Feuchtegehalt von ca. 5-7 Gew.-% atro (absolut trockenes Holz) eingesetzt. Für die Mittelschicht (MS) wurden Furniere der Dicke 2,3 mm verwendet, für die Deckschicht (DS) Furniere der Dicke 1,2 mm. Es wurden 7-lagige Laminate aus 5 MS-Lagen und 2 DS-Lagen als Furnierabschluss hergestellt.

Furniere der Größe 450 mm x 450 mm wurden über eine 4-Walzen-Beleimungsmaschine mit 40 g Prepolymer (je 20g auf die Ober- und Unterseite, entsprechend 100 g/m²) beaufschlagt. Zur Verbesserung der Verarbeitbarkeit war dem Prepolymer in einigen Fällen Zeolith-L-Pulver zugemischt. Das Flächengewicht von ca. 100 g/m² wurde in diesen Fällen beibehalten. Nach dem Prepolymerauftrag wurden jedem Furnier 8 g Wasser (entsprechend 20 g/m²) aufgesprüht.

Die Kaltverpressung des Laminate erfolgte bei Raumtemperatur mit 5 bis 10 bar Pressdruck. Das Laminat wurde dabei auf ca. 15,3 mm Höhe verdichtet. Die Zeit von Beginn der Beleimung bis zum Beginn der Verdichtung betrug ca. 10 Min., die Presszeit betrug 8 Minuten.

### C. Bestimmung der Kaltklebefestigkeit

Die für den Transport notwendige Kaltklebefestigkeit wurde durch Anheben des kalt vorgepressten Lamitverbundes geprüft, indem nach Entfernen der Zulagebleche das oberste Furnier mit Hilfe eines Messers einseitig ca. 5 cm angehoben wurde. Je nach der Ausprägung der Kaltklebeeigenschaft hielt der Verbund zusammen oder fiel sofort oder verzögert in dessen einzelnen Furniere auseinander. Die Charakterisierung wurde folgendermaßen vorgenommen:

| Kaltklebefestigkeit | Definition |
|---|---|
| 1 | Laminatverbund fällt spontan auseinander |
| 2 | Laminatverbund fällt leicht verzögert auseinander (nach 1-3 s) |
| 3 | Laminatverbund löst sich nach ca. 15s langsam auf |
| 4 | Laminatverbund hält nach Anheben dauerhaft zusammen |
| 5 | Transportable, stabile Platte |

### D. Heissverpressung der beleimten Furniere

Durch die Heissverpressung wurden die beleimten und kalt vorgepressten Furniere dauerhaft miteinander verbunden. Die durch die Presse zugeführte Energie führt zur Vernetzung des PUR-Bindemittels. Somit wird eine dauerhafte und hydrolysestabile PUR-Bindemittelfuge geschaffen, die mechanisch die an beiden Seiten der Klebefuge befindlichen Furniere miteinander verbindet.

### E. Bestimmung von Bindemittelpenetration und technischen Eigenschaften

Nach der Entnahme des Sperrholzes aus der Heißpresse wurde die Verklebungsgüte optisch auf eine flächige Verklebung überprüft (Blasenbildung, Ablösen der Furniere). Darüber hinaus wurde das Penetrationsverhalten ("Durchschlagen" des Bindemittels an die Sperrholzoberfläche beurteilt. Beim Durchschlagverhalten wurden die drei folgenden Klassen unterschieden:

| "Durchschlag" in % | |
|---|---|
| 100% - 10 % | Starkes "Durchschlagen" des Bindemittels an die Oberfläche |
| 10% - 4% | Geringes "Durchschlagen" des Bindemittels an die Oberfläche |
| 3% - 0% | kein "Durchschlagen", ggf. bei Furnierfehlern leichte Spuren erkennbar |

Die Verklebungsqualität wurde abschließend im Scherversuch festgestellt. Die Probenvorbereitung wurde entsprechend EN 314-1 Teil 5.1.3 durchgeführt. Die Proben wurden entsprechend EN 314-2 - Klasse 3: Außenbereich geprüft. Zum Vergleich wurde ein Nullwert von einem unmodifizierten PUR-Bindemittel ebenfalls ermittelt.

Die Ergebnisse sind in der folgenden Tabelle zusammengefasst:

| **Bindemittel** | **Klebefestigkeit** | **Durchschlag** | **Scherfestigkeit** |
|---|---|---|---|
| **Vergleichsbeispiele** | | | |
| Desmodur® 1520 A20 | 1 | stark | 2,14 N/mm² |
| Prepolymer 6 | 1 | stark | n.b. |
| Prepolymer 7 | 1-2 | stark | n.b. |

| **Erfindungsgemäße Beispiele** | | | |
|---|---|---|---|
| Prepolymer 1 | 5 | nein | 2,11 N/mm² |
| Prepolymer 1A | 4-5 | nein | 1,93 N/mm² |
| Prepolymer 1B | 4-5 | nein | 1,77 N/mm² |
| Prepolymer 1C | 4-5 | nein | 1,92 N/mm² |
| Prepolymer 2 | 5 | nein | 2,65 N/mm² |
| Prepolymer 3 | 4-5 | gering | 2,20 N/mm² |
| Prepolymer 4 | 5 | nein | 2,51 N/mm² |
| Prepolymer 5 | 3 | gering | 2,10 N/mm² |

| | | | |
|---|---|---|---|
| n.b. - nicht bestimmt | | | |

Die mit den erfindungsgemäßen Bindemitteln hergestellten Laminate weisen bereits nach Verpressen bei Raumtemperatur hohe Klebefestigkeiten auf. In den Deckschichten ist kein Durchschlagen des Bindemittels zu beobachten.

Darüber hinaus wurden einige der Sperrholzlaminate auch nach EN 314 -1 Teil 5.1.4 vorbehandelt und geprüft, um die Verwendungsmöglichkeit im Außenbereich gemäß EN314-2 zu bestätigen. Die Prüfungen zeigten nur geringen Einfluss der Vorbehandlung auf die Festigkeitswerte der nach dem erfindungsgemäßen Verfahren hergestellten Sperrhölzer. Nach der Probenvorbereitung durch 72-stündiges Kochen wurde eine Verringerung der Festigkeit gegenüber der Probenvorbereitung durch Kochwechseltest um nur ca. 15% festgestellt. Diese Ergebnisse lassen auf eine gute Hydrolysebeständigkeit der Proben schließen.

## Patentansprüche

1. Verfahren zur Herstellung von Schichtstoffen auf Holzfunierbasis, bei dem mit Bindemittel beleimte Furniere, gegebenenfalls in Kombination mit Papieren, Zellstoffen oder Gewebebahnen, verpresst werden, wobei als Bindemittel Urethangruppen enthaltende Prepolymere mit einem NCO-Gehalt von 20 bis 31 Gew.-% verwendet werden, die durch Umsetzung von Polyisocyanaten der Diphenylmethandüsocyanat-Reihe mit hydroxyfunktionellen Polyethern mit einem EO-Gehalt von mehr als 60 Gew.-% bezogen auf die Gesamtmenge an zur Herstellung eingesetzten Alkylenoxiden und wobei die hydroxyfunktionellen Polyether mit Verbindungen ausgewählt aus der Gruppe von Ethylenglykol, Diethylenglykol, Triethylenglykol, 1,2-Propylenglykol, 1,4-Butandiol, Hexamethylenglykol, Bisphenol A , Trimethylolpropan, Glycerin, Pentaerythrit, Sorbit, Rohrzucker, abgebaute Stärke oder Wasser gestartet werden, erhältlich sind.

2. Verfahren gemäß Anspruch 1, bei dem als Polyisocyanat polymeres Diphenylmethandiisocyanat (pMDI) mit einem Gehalt an monomerem Diphenylmethandiisocyanat von weniger als 55 Gew.-% eingesetzt wird.

3. Verfahren gemäß Anspruch 1, bei dem auf das mit Bindemittel beleimte Furnier Wasser aufgesprüht wird.

4. Verfahren gemäß Anspruch 1, bei dem das Bindemittel Zeolith enthält.

5. Verwendung von Urethangruppen enthaltenden Prepolymeren mit einem NCO-Gehalt von 20 bis 31 Gew.-%, die durch Umsetzung von Polyisocyanaten der Diphenylmethandiisocyanat-Reihe mit hydroxyfunktionellen Polyethern mit einem EO-Gehalt von mehr als 60 Gew.-%, bezogen auf die Gesamtmenge an zur Herstellung der Polyether eingesetzten Alkylenoxiden, wobei die hydroxyfunktionellen Polyether mit Verbindungen ausgewählt aus der Gruppe von Ethylenglykol, Diethylenglykol. Triethylenglykol, 1,2-Propylenglykol, 1,4-Butandieol, Hexamethylenglykol, Bisphenol A, Trimethylolpropan, Glycerin, Pentaerythrit, Sorbit, Rohrzucker, abgebaute Stärke oder Wasser gestartet werden, erhältlich sind, bei der Herstellung von Schichtstoffen auf Holzfunierbasis.

## Claims

1. Process for producing layered products based on wood veneer wherein binder-glued veneers, optionally in combination with papers, pulps or fabric webs, are pressed together, said binder comprising prepolymers having urethane groups and an NCO content of 20 to 31 wt.% which are obtainable by reaction of polyisocyanates of the diphenylmethane diisocyanate series with hydroxy-functional polyethers having an EO content of more than 60 wt.% in relation to the total quantity of alkylene oxides used for production and the hydroxy-functional polyethers being started with compounds selected from the group consisting of ethylene glycol, diethylene glycol, triethylene glycol, 1,2-propylene glycol, 1,4-butanediol, hexamethylene glycol, bisphenol A, trimethylolpropane, glycerol, pentaerythritol, sorbitol, cane sugar, degraded starch and water.

2. Process according to Claim 1, wherein polymeric diphenylmethane diisocyanate (pMDI) having a monomeric diphenylmethane diisocyanate content of less than 55 wt.% is used as polyisocyanate.

3. Process according to Claim 1, wherein water is sprayed onto the binder-glued veneer.

4. Process according to Claim 1, wherein the binder contains zeolite.

5. Use of prepolymers having urethane groups and an NCO content of 20 to 31 wt.% which are obtainable by reaction of polyisocyanates of the diphenylmethane diisocyanate series with hydroxy-functional polyethers having an EO content of more than 60 wt.% in relation to the total quantity of alkylene oxides used for production and the hydroxy-functional polyethers being started with compounds selected from the group consisting of ethylene glycol, diethylene glycol, triethylene glycol, 1,2-propylene glycol, 1,4-butanediol, hexamethylene glycol, bisphenol A, trimethylolpropane, glycerol, pentaerythritol, sorbitol, cane sugar, degraded starch and water, in the production of layered products based on wood veneer.

## Revendications

1. Procédé pour la fabrication de stratifiés à base de bois de placage dans lequel on comprime des bois de placage encollés par un liant, le cas échéant en combinaison avec des papiers, de la cellulose ou des tissus, en utilisant en tant que liants des prépolymères à groupes uréthannes et à une teneur en NCO de 20 à 31 % en poids qui ont été obtenus par réaction de polyisocyanates de la série du diphénylméthanediisocyanate avec des polyéthers à fonctions hydroxy et à une teneur en oxyde d'éthylène supérieure à 60 % du poids total des oxydes d'alkylène mis en oeuvre pour leur préparation, ces polyéthers à fonctions hydroxy ayant été obtenus par condensation sur des composés de départ choisis dans le groupe consistant en l'éthylèneglycol, le diéthylèneglcyol, le triéthylèneglycol, le 1,2-propylèneglycol, le 1,4-butanediol, l'hexaméthylèneglycol, le bisphénol A, le triméthylolpropane, le glycérol, le pentaérythritol, le sorbitol, le sucre de canne, l'amidon dégradé ou l'eau.

2. Procédé selon la revendication 1, dans lequel on utilise en tant que polyisocyanate un diphénylméthanediisocyanate polymère (pMDI) à une teneur en diphénylméthanediisocyanate monomère inférieure à 55 % en poids.

3. Procédé selon la revendication 1, dans lequel, sur les bois de placage encollés par le liant, on applique de l'eau par pulvérisation.

4. Procédé selon la revendication 1, dans lequel le liant contient une zéolite.

5. Utilisation de prépolymères à groupes uréthannes et à une teneur en NCO de 20 à 31 % en poids qui ont été obtenus par réaction de polyisocyanates de la série du diphénylméthanediisocyanate avec des polyéthers à fonctions hydroxy et à une teneur en oxyde d'éthylène supérieure à 60 % du poids total des oxydes d'alkylène mis en oeuvre pour la préparation des polyéthers, ces polyéthers à fonctions hydroxy ayant été obtenus par condensation sur des composés de départ choisis dans le groupe consistant en l'éthylèneglycol, le diéthylèneglycol, le triéthylèneglycol, le 1,2-propylèneglycol, le 1,4-butanediol, l'hexaméthylèneglycol, le bisphénol A, le triméthylolpropane, le glycérol, le pentaérythritol, le sorbitol, le sucre de canne, l'amidon dégradé ou l'eau, pour la fabrication de stratifiés à base de bois de placage.
